# EUROPÄISCHE PATENTANMELDUNG

(11) **EP 4 450 857 A2**
(43) Veröffentlichungstag der Anmeldung: **23.10.2024**
(21) Anmeldenummer: 24170623.3
(22) Anmeldetag: 16.04.2024
(51) Int. Cl.: F16L 11/16, B21C 37/12, B29C 53/56, B29C 53/78, B29C 63/32, F16L 55/165

(54) **PROFILTEIL ZUR AUSBILDUNG ALS WICKELROHR**

(30) Priorität: 17.04.2023 DE 102023203421
(71) Anmelder: Geiger Kanaltechnik GmbH & Co. KG, 87561 Oberstdorf (DE)
(72) Erfinder: GEIGER, Willi, 87561 Oberstdorf (DE)
(74) Vertreter: BRP Renaud & Partner mbB Rechtsanwälte Patentanwälte Steuerberater

(57) **Zusammenfassung**

Die Erfindung betrifft ein Profilteil (1) zur Ausbildung als Wickelrohr (10) für die Auskleidung, insbesondere Sanierung, eines Kanals (20),
- mit einem sich entlang einer Erstreckungsrichtung (ER) erstreckenden Grundkörper (2) aus Endlosmaterial, an welchem ein sich entlang der Erstreckungsrichtung (ER) erstreckender Vorsprung (3) und, quer zur Erstreckungsrichtung (ER) dem Vorsprung gegenüberliegend, eine sich ebenfalls entlang der Erstreckungsrichtung (ER) erstreckende und komplementär zum Vorsprung (3) ausgebildete Ausnehmung (4) ausgebildet ist,
- wobei der Grundkörper (2) im Profil senkrecht zur Erstreckungsrichtung (ER) die geometrische Grundform eines Rechtecks (5) mit zwei einander gegenüberliegenden Schmalseiten (6a, 6b) und zwei einander gegenüberliegenden Breitseiten (7a, 7b) aufweist, wobei an einer Ersten (6a) der beiden Schmalseiten (6a, 6b) der Vorsprung (3) und an einer Zweiten (6b) der beiden Schmalseiten (6a, 6b) die Ausnehmung (4) angeordnet ist,
- wobei der an der ersten Schmalseite (6a) ausgebildete Vorsprung in Richtung von der zweiten Schmalseite (6b) weg vom Grundkörper (2) absteht und die an der zweiten Schmalseite vorgesehene Ausnehmung in Richtung zur ersten Schmalseite (6a) in den Grundkörper (2) hineinragt.

## Beschreibung

Die Erfindung betrifft ein Profilteil zur Ausbildung als Wickelrohr sowie ein Wickelrohr aus einem solchen Profilteil. Die Erfindung betrifft ferner ein Verfahren zum Zusammenbauen eines solchen Wickelrohrs sowie eine Vorrichtung zur Durchführung dieses Verfahrens.

Durch undichte Kanäle kann es zu Beeinträchtigungen des Bodens und Grundwassers kommen. Um dem Entgegenzuwirken, werden Kanäle einer Sanierung unterzogen. Hierzu ist es bekannt, in den zu sanierenden Kanal ein Wickelrohr einzubringen. Ein solches Wickelrohr wird oftmals aus einem extrudierten, streifenförmigen Profilteil aus einem PVC-Endlosmaterial gefertigt. Bekannt ist aber auch die Verwendung anderer Materialien wie Polyethylen (PE) oder Polypropylen (PP), welches mit Stahlfasern verstärkt sein kann. Das Profilteil besitzt dabei im Profil senkrecht zu seiner Längserstreckung typischerweise die Geometrie eines Rechtecks mit zwei einander gegenüberliegenden Schmalseiten und zwei einander gegenüberliegenden Breitseiten.

Zum Herstellen des Wickelrohrs aus dem Profilteil wird in den Kanal eine Wickelmaschine eingebracht, mittels welcher das streifenförmige Profilteil schraubenförmig auf die Kanalwandung des Kanals gewickelt werden kann. Dabei werden mittels der Wickelmaschine benachbarte Umläufe des Profilteils miteinander verbunden. Die Befestigung zweier benachbarter Umläufe aneinander erfolgt bei herkömmlichen Profilteilen mittels eines Feder-Nut-Systems, mittels welchem die beiden Umläufe miteinander verclipst werden können. Das an einem bestimmten Umlauf vorgesehene Federelement kann somit mit dem am benachbarten Umlauf vorgesehenen Nutelement in Eingriff gebracht werden.

Bei herkömmlichen Profilteilen erweist es sich als nachteilig, dass zum Miteinander Verbinden der beiden benachbarten Umläufe des Profilteils die Ausübung einer Kraft in Richtung zur Kanalwandung hin erforderlich ist, auf welcher das Wickelrohr angeordnet werden soll. Dies kann zwar mithilfe einer herkömmlichen Wickelmaschine geschehen. Jedoch ist hierfür eine von der Wickelmaschine bereitzustellende mechanische Abstützung erforderlich, die zwischen dem Profilteil bzw. dem Wickelrohr und der Kanalwandung angeordnet ist und an welcher sich die beiden miteinander zu verbindenden Umläufe des Profilteils abstützen können. Dadurch ist es jedoch unmöglich, das Wickelrohr direkt auf der Oberfläche der Kanalwandung anzuordnen. Vielmehr ist lediglich eine Anordnung des Wickelrohrs im Abstand zur Kanalwandung möglich.

Es ist daher eine Aufgabe der vorliegenden Erfindung, eine verbesserte Ausführungsform für ein Profiteil bzw. Wickelrohr zu schaffen, welches voranstehenden Problematik Rechnung trägt. Entsprechend sollen auch ein verbessertes Verfahren zum Herstellen eines solchen Wickelrohrs sowie eine verbesserte Vorrichtung zur Durchführung dieses Verfahrens bereitgestellt werden. Insbesondere sollen ein Profilteil, ein Wickelrohr, ein Verfahren und eine Vorrichtung geschaffen werden, welche eine direkte, also abstandsfreie Anordnung des Wickelrohrs auf der Kanalwandung des Kanals ermöglichen.

Diese Aufgabe wird durch das Verfahren gemäß den unabhängigen Patentansprüchen gelöst. Bevorzugte Ausdrucksformen sind Gegenstand der abhängigen Patentansprüche.

Grundidee der Erfindung ist demnach, ein streifenförmiges Profilteil so auszugestalten, dass im rechteckförmigen Profil senkrecht zur Längserstreckungsrichtung ein Vorsprung und eine komplementär dazu ausgebildete Ausnehmung nicht an den beiden Breitseiten, sondern an den beiden Schmalseiten des Rechtecks angeordnet sind. Dies ermöglicht es bei geeigneter geometrischer Ausgestaltung von Vorsprung und Ausnehmung, zwei benachbarte Umläufe des Profilteils zur Ausbildung des schraubenförmigen Wickelrohrs miteinander zu verbinden, ohne dass hierfür beidseitig Druck auf Vorsprung und Ausnehmung ausgeübt werden muss. Somit kann auch die bei herkömmlichen Wickelvorgängen mittels herkömmlicher Wickelmaschinen erforderliche und oben erwähnte Abstützung zwischen Profilteil bzw. Wickelrohr und der Kanalwandung entfallen. Auf diese Weise können das Profilteil bzw. Wickelrohr direkt, also abstandsfrei auf der Kanalwandung des Kanals anzuordnen.

Ein erfindungsgemäßes Profilteil dient zur Ausbildung als Wickelrohr für die Auskleidung, insbesondere Sanierung, eines Kanals. Das Profilteil umfasst einen sich entlang einer Erstreckungsrichtung erstreckenden Grundkörper aus Endlosmaterial. Seitlich am Grundkörper ist ein sich entlang der Erstreckungsrichtung erstreckender Vorsprung ausgebildet. Quer zur Erstreckungsrichtung und dem Vorsprung gegenüberliegend ist eine sich ebenfalls entlang der Erstreckungsrichtung erstreckende und komplementär zum Vorsprung ausgebildete Ausnehmung ausgebildet. Der Grundkörper besitzt im Profil senkrecht zur Erstreckungsrichtung die geometrische Grundform eines Rechtecks mit zwei einander gegenüberliegenden Schmalseiten und zwei einander gegenüberliegenden Breitseiten. An einer Ersten der beiden Schmalseiten ist besagte Vorsprung angeordnet. An einer Zweiten der beiden Schmalseiten ist besagte Ausnehmung angeordnet. Dabei steht der an der ersten Schmalseite ausgebildete Vorsprung in Richtung von einer Zweiten der beiden Schmalseite weg vom Grundkörper ab. Die an der zweiten Schmalseite vorgesehene Ausnehmung ragt in Richtung zur ersten Schmalseite in den Grundkörper hinein.

Gemäß einer vorteilhaften Weiterbildung verlaufen eine Profil-Längsrichtung parallel zu einer der Breitseiten und eine Profil-Querrichtung orthogonal zur Profil-Längsrichtung und parallel zu einer der Schmalseiten. Bei dieser Weiterbildung sind die Ausnehmung und der Vorsprung so ausgebildet und aufeinander abgestimmt, dass der Vorsprung in die Ausnehmung geführt werden kann, ohne dass eine Kraftausübung entgegen der Profil-Querrichtung auf Vorsprung und Ausnehmung erforderlich ist. Somit kann eine Abstützung zweier benachbarter Umläufe des Profilteils entlang der Profil-Richtung während der Befestigung der beiden Umläufe aneinander entfallen. Dies vereinfacht die Befestigung benachbarte Umläufe aneinander. Außerdem kann das Profilteil bzw. Wickelrohr zumindest in Kanalabschnitten, in welchen die Oberfläche der Kanalwandung sprung- bzw. stufenfrei ausgebildet ist, flächig direkt, also insbesondere abstandsfrei, auf der Kanalwandung angeordnet werden.

Gemäß einer bevorzugten Ausführungsform ist die Ausnehmung am Übergang von der ersten Schmalseite zur ersten Breitseite angeordnet und somit sowohl zur ersten Schmalseite als auch zur ersten Breitseite hin offen ausgebildet. Dies vereinfacht die Befestigung benachbarte Umläufe des Profilteils zur Ausbildung des Wickelrohrs aneinander. Bevorzugt kann somit der Vorsprung eines des Profilteils ohne Kraftausübung entlang der Profil-Querrichtung in die Ausnehmung des Profilteils eingebracht werden.

Gemäß einer vorteilhaften Weiterbildung ist die Ausnehmung als Nut mit zwei ineinander übergehenden Nutflanken ausgebildet. Bei dieser Weiterbildung erstreckt sich eine Erste der beiden Nutflanken parallel zu einer Breitseite. Eine Zweite der beiden Nutflanken weist eine gekrümmte Kontur, vorzugsweise die Kontur eines Ellipsensegments, auf. Dies vereinfacht die Befestigung benachbarte Umläufe des Profilteils zur Ausbildung des Wickelrohrs aneinander.

Bei einer bevorzugten Ausführungsform ist am Profilteil im Bereich der Ausnehmung oder/und im Bereich des Vorsprungs wenigstens ein Dichtungselement, bevorzugt aus einem Elastomer, besonders bevorzugt aus Gummi, angeordnet, insbesondere befestigt. Auf diese Weise können benachbarte Profilteile fluiddicht miteinander verbunden werden. Eine unerwünschte Leckage am Übergang zwischen zwei solchen Profilteilen kann auf diese Weise verhindert werden.

Die Erfindung betrifft ferner ein Wickelrohr mit einem voranstehend vorgestellten, erfindungsgemäßen Profilteil. Die voranstehend erläuterten Vorteile des erfindungsgemäßen Profilteils übertragen sich daher auch auf das erfindungsgemäße Wickelrohr. Beim erfindungsgemäßen Wickelrohr läuft das Profilteil unter Ausbildung mehrerer Umläufe schraubenförmig um eine Mittellängsachse um, so dass der an einem jeweiligen Umlauf des Profilteils vorgesehene Vorsprung formschlüssig in die am benachbarten Umlauf ausgebildete Ausnehmung eingreift. Zweckmäßig besitzt das erfindungsgemäße Wickelrohr die Geometrie eines Hohlzylinders.

Besonders bevorzugt sind benachbarte Umläufe an den beiden Schmalseiten des jeweiligen Profilteils miteinander verbunden sind. Alternativ oder zusätzlich sind bei dieser Variante benachbarte Umläufe an den beiden Breitseiten des jeweiligen Profilteils verbindungsfrei ausgebildet.

Bei einer bevorzugten Ausführungsform sind benachbarte Umläufe des Wickelrohrs, vorzugsweise im Bereich des Formschlusses, stoffschlüssig, bevorzugt mittels einer Klebverbindung, miteinander verbunden, Hierzu kann ein geeigneter Klebstoff verwendet werden. Dadurch wird eine dauerhaft stabile mechanische Befestigung benachbarter Umläufe aneinander erreicht. Gleichzeitig kann mittels des Klebstoffs eine fluidische Abdichtung zwischen den Umläufen erreicht.

Bei einer anderen bevorzugten Ausführungsform können benachbarte Umläufe des Wickelrohrs stoffschlüssig unter der Anwendung von Wärme und/oder Druck eine unlösbare Verbindung eingehen, insbesondere thermisch aneinandergefügt und auf diese Weise miteinander verschweißt werden. Das thermische Fügen bzw. Verschweißen benachbarter Umläufe stellt eine dauerhaft stabile und fluiddichte Verbindung dar. Die Einbringung der Wärme kann mittels eines Heißgases, bevorzugt jedoch induktiv geschehen. Besagte Wärme kann in letzterem Fall durch einen auf die beiden zu fügenden Umläufe des Profilteils ausgerichtete Induktionseinheit in einem Metallkörper induziert werden, der thermisch mit den beiden zu fügenden Umläufen verbunden ist. Der Metallkörper wird dadurch erwärmt und stellt die für das Verschweißen benötigte Wärme zur Verfügung.

Denkbar ist auch eine elektrische Widerstandserwärmung des Metallkörpers infolge eines elektrischen Stromflusses durch den Metallkörper. In diesem Fall kann der Metallkörper als elektrischer Heizwiderstand ausgebildet sein.

Bei einer anderen bevorzugten Ausführungsform sind benachbarte Profilteile, vorzugsweise im Bereich des Formschlusses, mittels eines Dichtungselements miteinander verbunden sind. Auf diese Weise können benachbarte Umläufe fluiddicht miteinander verbunden bzw. aneinander befestigt werden. Eine unerwünschte Leckage am Übergang zwischen zwei solchen Profilteilen kann auf diese Weise verhindert werden.

Die Erfindung betrifft außerdem ein Verfahren zum Zusammenbauen eines voranstehend vorgestellten, erfindungsgemäßen Profilteils zu einem erfindungsgemäßen Wickelrohr in einem zu sanierenden Kanal. Dabei erstreckt sich der zu sanierende Kanal entlang einer Kanallängsrichtung und wird von einer Kanalumfangswandung begrenzt. Die voranstehend erläuterten Vorteile des erfindungsgemäßen Profilteils bzw. erfindungsgemäßen Wickelrohrs übertragen sich auch auf das erfindungsgemäße Verfahren. Das erfindungsgemäße Verfahren umfasst zwei Maßnahme a) und b). Gemäß Maßnahme a) wird das Profilteil bereitgestellt. Gemäß Maßnahme b) werden die einzelnen Umläufe des zu bildenden Wickelrohrs nacheinander schraubenförmig auf der Kanalumfangswandung angeordnet. Die Anordnung der Umläufe des Profilteils auf der Kanalumfangswandung erfolgt zweckmäßig derart, dass die Mittellängsachse des Wickelrohrs entlang der Kanallängsrichtung des Kanals verläuft. Dabei wird der jeweils auf der Kanalumfangswandung anzuordnende Umlauf, vorzugsweise formschlüssig, mit dem vorhergehenden, bereits auf der Kanalumfangswandung angeordneten Umlauf verbunden.

Gemäß einer bevorzugten Ausführungsform des Verfahrens wird der Vorsprung ohne Kraftausübung entlang der Profil-Querrichtung in die Ausnehmung geführt. Alternativ oder zusätzlich kann das Profilteil bzw. das Wickelrohr bei dieser Ausführungsform abstandsfrei auf der Kanalumfangswandung angeordnet werden. Alternativ oder zusätzlich liegt das Profilteil bzw. das Wickelrohr bei dieser Ausführungsform mit der radial äußeren Breitseite flächig an der Kanalumfangswandung an.

Besonders bevorzugt wird zur Ausbildung einer formschlüssigen Verbindung zwischen zwei benachbarten Umläufen des Profilteils der Vorsprung des noch auf der Kanalumfangswandung anzuordnenden (ersten) Umlaufs mit der Ausnehmung des benachbarten und bereits auf der Kanalumfangswandung angeordneten (zweiten) Umlaufs in Eingriff gebracht.

Gemäß einer vorteilhaften Weiterbildung des erfindungsgemäßen Verfahrens werden zum In-Eingriff-Bringen des Vorsprungs mit der Ausnehmung im Zuge von Maßnahme b) zwei Teil-Maßnahmen x) und y) ausgeführt. Gemäß Maßnahme x) werden ein erster Umlauf und ein zu diesem ersten Umlauf benachbarter zweiter Umlauf aufeinander zu bewegt. Der zweite Umlauf ist dabei bereits auf der Kanalumfangswandung des Kanals angeordnet. Der erste Umlauf soll hingegen erst noch auf der Kanalumfangswandung angeordnet werden und dabei am zweiten Umlauf befestigt werden. Hierzu wird der erste Umlauf unter einem spitzen Winkel, vorzugsweise zwischen 20° und 40°, auf den zweiten Umlauf des Profilteils zu bewegt, bis der am ersten Umlauf vorgesehene und dem zweiten Umlauf zugewandte Vorsprung zumindest teilweise in der am zweiten Profilteil vorgesehene und dem ersten Umlauf zugewandten Ausnehmung des benachbarten (zweiten) Umlaufs aufgenommen ist.

Gemäß Maßnahme y) wird der spitze Winkel zwischen den beiden Umläufen reduziert, vorzugsweise auf einen Null-Wert, bis der Vorsprung vollständig, vorzugsweise formschlüssig, in der Ausnehmung angeordnet ist und gleichzeitig beide Umläufe auf der Kanalumfangswandung angeordnet sind. Die Maßnahmen x) und y) können zeitlich aufeinander folgend oder zeitlich überlappend erfolgen. In letzterem Fall wird also bereits mit Maßnahme y) begonnen, bevor Maßnahme x) beendet ist.

Gemäß einer vorteilhaften Weiterbildung des Verfahren kann in einer der Maßnahme x) vorangehenden Maßnahme x0) der noch anzuordnende Umlauf in dem Längsschnitt durch die Mittellängsachse im Abstand zur Kanalumfangswandung und parallel zu der benachbarten, und bereits auf der Kanalumfangswandung angeordneten Umlauf des Profilteils positioniert werden.

Die Erfindung betrifft ferner eine Vorrichtung zur Durchführung des voranstehend vorgestellten, erfindungsgemäßen Verfahrens. Die Vorteile des voranstehend erläuterten erfindungsgemäßen Verfahrens übertragen sich daher auf die erfindungsgemäße Vorrichtung. Die erfindungsgemäße Vorrichtung umfasst eine um eine Drehachse drehbar ausgebildete Rollenanordnung, welche mehrere drehbare Rollen zum Transportieren und Ausrichten des Profilteils relativ zum Kanal bzw. dessen Kanalwandung aufweist. Die Rollenanordnung der erfindungsgemäßen Vorrichtung ist derart ausgebildet, dass sie das in die Vorrichtung eingebrachte Profilteil mittels der Rollenanordnung so ablenkt, dass das Profilteil nach der Ablenkung als Wickelrohr unter Ausbildung mehrerer Umläufe schraubenförmig um die Drehachse umläuft. Das Profilteil verlässt die Rollenanordnung derart ausgerichtet, dass der an einem jeweiligen Umlauf vorgesehene Vorsprung formschlüssig in die am benachbarten Umlauf ausgebildete Ausnehmung eingreift.

Gemäß einer bevorzugten Ausführungsform der erfindungsgemäßen Vorrichtung umfasst wenigstens eine Antriebseinheit, welche das Profilteil durch die Rollenanordnung der Vorrichtung bewegt werden kann. Die Lagerung der Vorrichtung und die resultierenden Antriebskräfte aus der wenigstens einen Antriebseinheit zum Vorschub des Profilteils bzw. des Wickelrohrs bewegen die Vorrichtung translatorisch in Richtung der Drehachse und rotatorisch um die Drehachse.

Gemäß einer weiteren bevorzugten Ausführungsform kann die Vorrichtung optional eine Klebeeinheit mit einem Klebstoffauslass, insbesondere in Form einer Auslassdüse, aufweisen, mittels welchem wie oben erläutert Klebstoffs in die Ausnehmung des jeweiligen Umlaufs eingebracht, insbesondere eingedüst, werden kann.

Gemäß einer weiteren bevorzugten Ausführungsform kann die Vorrichtung optional eine elektrische Induktionseinheit umfassen, welche zum stoffschlüssigen Fügen bzw. Verschweißen benachbarter Umläufe dient. Die hierzu erforderliche Wärme kann also induktiv in das Profilteil eingebracht werden. Hierzu kann in wenigstens einem Metallkörper der Vorrichtung, der thermisch mit dem zu fügenden Profilteil verbunden ist, durch elektrische Induktionsströme, die mittels der Induktionseinheit erzeugt werden, ein elektrischer Strom erzeugt werden, so dass sich der Metallkörper erwärmt und Wärme zum thermischen Fügen bzw. Verschweißen des Profilteils an dieses abgibt.

In einer dazu alternativen Variante kann auf die Induktionseinheit verzichtet sein und der wenigstens eine Metallkörper als elektrisch bestrombarer Heizweiderstand ausgebildet sein.

Das stoffschlüssige Fügen bzw. Verschweißen kann bevorzugt im beliebigen Weg- und/oder Streckenversatz nach Abschluss von oben beschriebener Maßnahme y) des erfindungsgemäßen Verfahrens erfolgen.

Gemäß einer weiteren vorteilhaften Weiterbildung weist die Rollenanordnung wenigstens ein Rollenpaar mit zwei Rollen vorzugsweise wenigstens zwei Rollenpaare mit jeweils zwei Rollen besonders bevorzugt drei Rollenpaare mit jeweils zwei Rollen auf. Bei dieser Weiterbildung kann das Profilteil zwischen den beiden Rollen des betreffenden Rollenpaars hindurchgeführt werden.

Besonders bevorzugt kann wenigstens eine Rolle, vorzugsweise ein Rollenpaar unter einem ersten Umfangswinkel zu einer Position angeordnet sein, an welcher benachbarte Umläufe des Wickelrohrs miteinander in Eingriff gebracht werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.
- Fig. 1: ein Beispiel eines erfindungsgemäßen Profilteils in einer Draufsicht,
- Fig. 2: das Profilteil der Figur 1 im Profil senkrecht zur Erstreckungsrichtung des Profilteils,
- Fig. 3a: ein Beispiel eines erfindungsgemäßen Wickelrohrs in einem Längsschnitt,
- Fig. 3b: das Wickelrohr der Figur 3a in einem Querschnitt,
- Fig. 4a, 4b: Darstellungen, die das Aneinanderfügen zweier benachbarter Umläufe des Profilteils in der Art von Momentaufnahmen illustrieren.
- Fig. 5: in stark vereinfachter schematischer Darstellung ein Beispiel einer erfindungsgemäßen Vorrichtung, mittels welcher das erfindungsgemäße Verfahren durchgeführt werden kann.
- Fig. 6: eine Draufsicht auf die Vorrichtung der Figuren 5 und 6 entlang der axialen Richtung.

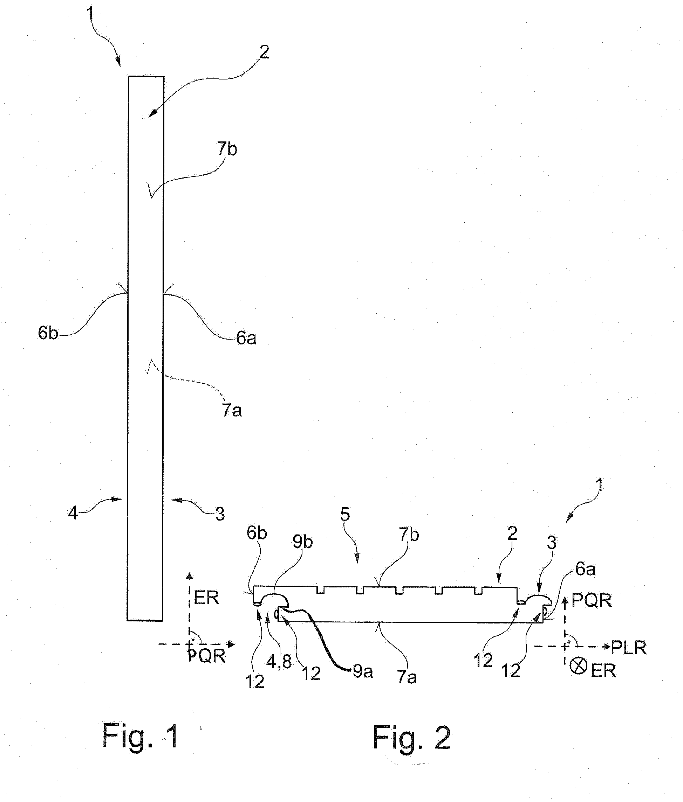

Die Figur 1 zeigt ein Beispiel eines erfindungsgemäßen Profilteils 1 vor der Ausbildung zum Wickelrohr 10 in einer Draufsicht. Demnach umfasst das Profilteil 1 einen streifenartig ausgebildeten Grundkörper 2 aus Endlosmaterial, welches sich entlang einer (Längs-)Erstreckungsrichtung ER erstreckt.

Die Figur 2 zeigt das Profilteil 1 im Profil senkrecht zur Erstreckungsrichtung ER. Demnach besitzt der streifenartig ausgebildete Grundkörper 2 im Profil senkrecht zur Erstreckungsrichtung ER die geometrische Grundform eines Rechtecks 5 mit zwei einander gegenüberliegenden Schmalseiten 6a, 6b und mit zwei einander gegenüberliegenden Breitseiten 7a, 7b.

Gemäß Figur 2 steht vom Grundkörper 2 seitlich, also quer zur Erstreckungsrichtung ER, ein sich entlang der Erstreckungsrichtung ER erstreckender Vorsprung 3 ab. Vom Grundkörper 2 steht außerdem eine sich entlang der Erstreckungsrichtung ER erstreckende Ausnehmung 4 ab. Der Vorsprung 3 und die Ausnehmung 4 liegen einander entlang einer Querrichtung QR, die sich orthogonal zur Erstreckungsrichtung ER erstreckt, gegenüber. Der Vorsprung 3 ist an einer Ersten 6a der beiden Schmalseiten 6a, 6b angeordnet. Die Ausnehmung 4 ist an einer Zweiten 6b der beiden Schmalseiten 6a, 6b angeordnet.

Gemäß Figur 2 steht der an der ersten Schmalseite 6a angeordnete Vorsprung 3 in Richtung von der zweiten Schmalseite 6b weg vom Grundkörper 2 ab. Die an der zweiten Schmalseite 6b angeordnete Ausnehmung 4 ragt in Richtung zur ersten Schmalseite 6a in den Grundkörper 2 hinein. Die Ausnehmung 4 kann dabei am Übergang von der ersten Schmalseite 6a zur ersten Breitseite 7a angeordnet und somit sowohl zur ersten Schmalseite 6a als auch zur ersten Breitseite 7a hin offen ausgebildet sein.

Die Ausnehmung 4 kann gemäß Figur 2 als Nut 8 mit zwei ineinander übergehenden Nutflanken 9a, 9b ausgebildet sein. Dabei erstreckt sich eine Erste 9a der beiden Nutflanken 9a, 9b parallel zu einer Breitseite 7a, 7b. Eine Zweite 9b der beiden Nutflanken 9a, 9b weist eine gekrümmte Kontur 9b, vorzugsweise die Kontur eines Ellipsensegments auf.

Gemäß Figur 2 verläuft eine Profil-Längsrichtung PLR parallel zu den Breitseiten 7a, 7b. Eine Profil-Querrichtung PQR verläuft orthogonal zur Profil-Längsrichtung PLR und parallel zu den beiden Schmalseiten 6a, 6b. Die Ausnehmung 4 und der Vorsprung 3 des Profilteils 1 sind dabei so ausgebildet und aufeinander abgestimmt, dass der Vorsprung 3 in die Ausnehmung 4 geführt werden kann, ohne dass hierzu einen von außerhalb des Profils einwirkende Kraft entgegen der Profil Querrichtung PQR erforderlich ist.

Am Profilteil 1 kann im Bereich der Ausnehmung 4 bzw. im Bereich des Vorsprungs 3 ein Dichtungselement aus einem Elastomer, beispielsweise aus Gummi, angeordnet und befestigt. Auf diese Weise können benachbarte Profilteile 1 fluiddicht miteinander verbunden werden. Eine unerwünschte Leckage am Übergang zwischen zwei solchen Profilteilen kann auf diese Weise verhindert werden. In Figur 2 sind exemplarisch mögliche Positionen eines solchen Dichtungselements eingezeichnet und mit dem Bezugszeichen 12 bezeichnet.

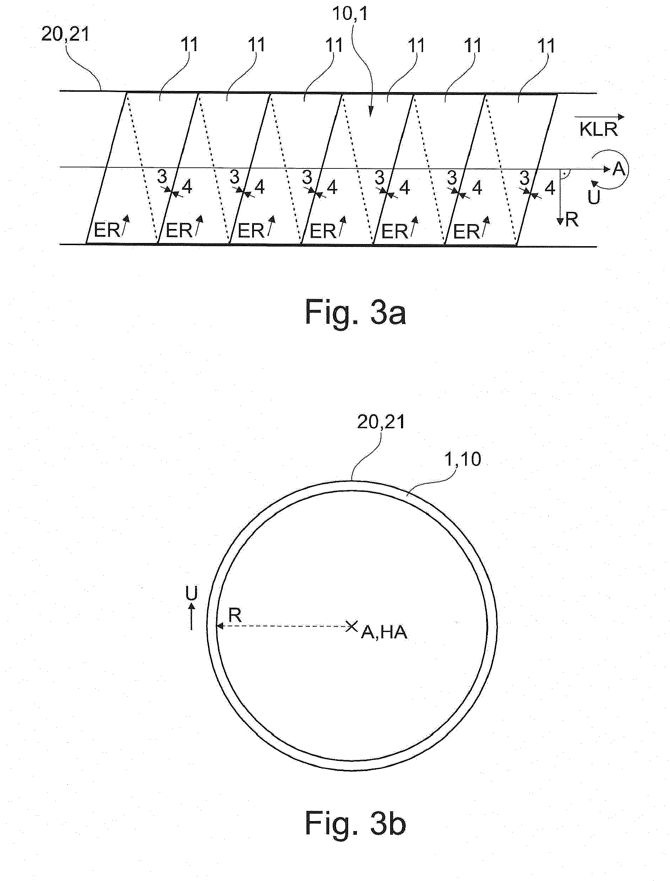

Die Figuren 3a und 3b zeigen ein erfindungsgemäßes Wickelrohr 10 aus dem in den Figuren 1 und 2 gezeigten erfindungsgemäßen Profilteil 1. Dabei ist Figur 3a ein Längsschnitt entlang einer Mittellängsachse HA des Wickelrohrs 10. Die Figur 3b ist ein Querschnitt senkrecht zur Mittellängsachse HA. Eine axiale Richtung A erstreckt sich entlang der Mittellängsachse HA. Eine radiale Richtung R erstreckt sich senkrecht zur axialen Richtung A von der Mittellängsachse HA weg. Eine Umfangsrichtung U läuft senkrecht sowohl zur axialen Richtung A als auch zur radialen Richtung R um die Mittellängsachse A um.

Gemäß den Figuren 3a und 3b läuft das Profilteil 1 unter Ausbildung mehrerer Umläufe 11 schraubenförmig um die Mittellängsachse HA um. Dabei greift der am jeweiligen Umlauf 11 vorgesehene Vorsprung 3 formschlüssig in die am benachbarten Umlauf 11 ausgebildete Ausnehmung 4 ein (in Figur 3a nur angedeutet). In axialer Richtung A benachbarte Umläufe 11 liegen entlang der axialen Richtung A nebeneinander an. Das Wickelrohr 10 besitzt somit die geometrische Formgebung eines Hohlzylinders.

In den Figuren 3a und 3b ist auch eine Kanalumfangswandung 21 angedeutet, die einen sich entlang einer Kanallängsrichtung KLR erstreckenden Kanal 20 begrenzt. Im Beispielszenario besitzt die Kanalumfangswandung 21 eine zylindrische Geometrie. Im Querschnitt der Figur 3b besitzt die Kanalumfangswandung 21 daher eine kreisrunde Geometrie. Das montierte Wickelrohr 10 besitzt die Geometrie eines Hohlzylinders.

Wie die Figuren 3a und 3b veranschaulichen, liegt das Wickelrohr 10 radial außen direkt, also abstandsfrei, an der Kanalumfangswandung 21 an und deckt diese vollständig ab. Dabei liegt das Wickelrohr 1 bzw. das Profilteil 10 mit seiner der radial äußeren Breitseite flächig an der Kanalumfangswandung an. Der am Profilteil 1 vorgesehene Vorsprung 3 kann ohne Kraftausübung entlang der Profil-Querrichtung PQR in die am benachbarten Umlauf 11 vorgesehene Ausnehmung 4 geführt werden.

Zur Ausbildung des Wickelrohrs 10 aus dem Profilteil 1 und zur Anordnung des Wickelrohrs 10 wird das erfindungsgemäße Verfahren ausgeführt. Das erfindungsgemäße Verfahren umfasst zwei Maßnahmen a) und b). In Maßnahme a) wird das erfindungsgemäße Profilteil 1 in dem Kanal 20 bereitgestellt. Gemäß Maßnahme b) werden nacheinander mehrere Umläufe 11 des zu bildenden Wickelrohrs 10 schraubenförmig auf der Kanalumfangswandung 21 angeordnet. Dabei wird das Profilteil 1 bzw. das Wickelrohr 10 direkt, also idealerweise abstandsfrei auf der Kanalumfangswandung 21 angeordnet. Die Anordnung erfolgt derart, dass die Mittellängsachse HA des Wickelrohrs 10 mit den schraubenförmigen Umläufen 11 entlang der Kanallängsrichtung KLR verläuft.

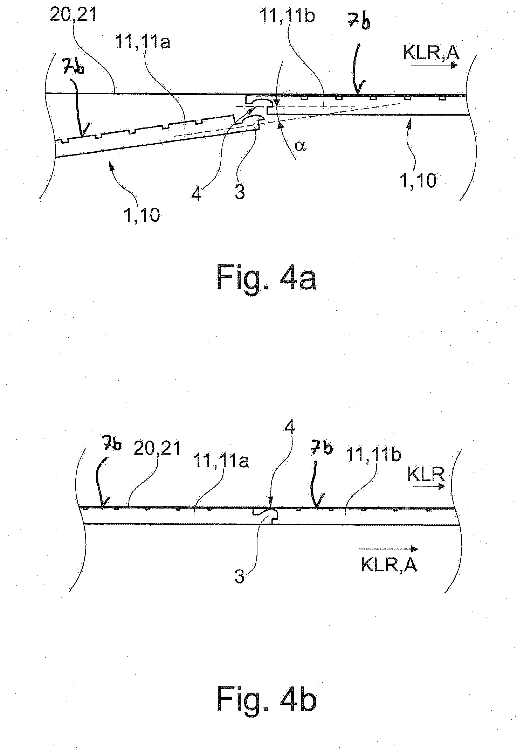

Dabei wird der jeweils noch auf der Kanalumfangswandung 21 anzuordnende Umlauf 11 formschlüssig mit dem vorhergehenden, bereits auf der Kanalumfangswandung 21 angeordneten Umlauf 11 verbunden. Die Ausbildung der formschlüssigen Verbindung zwischen zwei benachbarten Umläufe 11 beim Anordnen auf der Kanalumfangswandung 21 wird im Folgenden anhand der Figuren 4a und 4b erläutert. Demnach werden zur Ausbildung der formschlüssigen Verbindung zwischen zwei benachbarten Umläufen 11 des Profilteils 1 der Vorsprung 3 des am noch auf der Kanalumfangswandung 21 anzuordnenden ersten Umlaufs 11a, 11 mit der Ausnehmung 4 des benachbarten und bereits auf der Kanalumfangswandung 21 angeordneten Umlaufs 11b, 11 in Eingriff gebracht.

Optional kann zuvor in die Ausnehmung 4 ein Klebstoff eingebracht werden.

Zum In-Eingriff-Bringen des Vorsprungs 3 mit der Ausnehmung 4 werden im Zuge von Maßnahme b) zwei zusätzliche Teil-Maßnahmen x) und y) ausgeführt. Gemäß Teil-Maßnahme x) wird - in dem in den Figuren 4a und 4b gezeigten Längsschnitt durch die Mittellängsachse HA des Wickelrohrs 10 - der auf der Kanalumfangswandung 21 anzuordnende erste Umlauf 11a, 11 unter einem spitzen Winkel α auf den benachbarten und bereits auf der Kanalumfangswandung 21 angeordneten zweiten Umlauf 11b, 11b des Profilteils 1 zu bewegt. Dieses Szenario zeigt die Figur 4a. Dabei kann der spitze Winkel α zwischen 20° und 40° betragen. Die Bewegung des ersten Umlaufs 11a, 11 zum zweiten Umlauf 11b, 11 hin erfolgt so lange, bis der Vorsprung 3 des ersten Umlaufs 11a, 11 zumindest teilweise in der Ausnehmung 4 des benachbarten zweiten Umlaufs 11b, 11 aufgenommen ist. In einer zweiten Teil-Maßnahme y) wird - durch Verkippen des ersten Umlaufs 11a, 11 relativ zum zweiten Umlaufs 11b, 11 - der spitze Winkel α zwischen den beiden Umläufen 11a, 1b - vorzugsweise auf einen Null-Wert - reduziert, bis der Vorsprung 3 formschlüssig in der Ausnehmung 4 angeordnet ist und beide Umläufe 11 auf der Kanalumfangswandung 21 angeordnet sind. Dieses Szenario zeigt die Figur 4b. In dem gezeigten Längsschnitt erstrecken sich beide Umläufe 11a, 11b entlang der Kanallängsrichtung KLR. Dabei verlängert der zweite Umlauf 11, 11b den ersten Umlauf 11, 11a.

Die beiden Teil-Maßnahmen x) und y) können zeitlich aufeinanderfolgend oder zeitlich überlappend erfolgen. In letzterem Fall wird also mit Maßnahme y) begonnen, bevor Maßnahme x) beendet ist.

Wurde in die Ausnehmung 4 ein Klebstoff eingebracht, so werden die beiden Umläufe 11a, 11b mittels des Klebstoffs im Bereich von Vorsprung 3 und Ausnehmung 4 unter Ausbildung einer Klebverbindung stoffschlüssig miteinander verbunden.

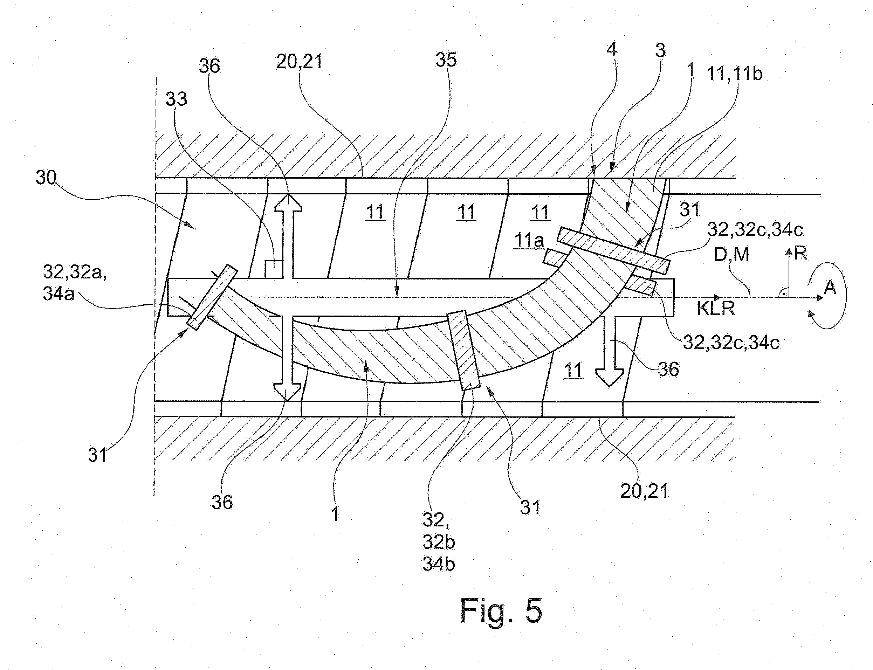

Die Figur 5 illustriert in grobschematischer Darstellung und in einem Längsschnitt ein Beispiel einer erfindungsgemäßen Vorrichtung 30 in Form einer Wickelmaschine, die zur Durchführung des voranstehend erläuterten, erfindungsgemäßen Verfahrens ausgebildet ist. Die Vorrichtung 30 umfasst einen um eine Drehachse D drehbar ausgebildeten Grundkörper 35, an welchem drehfest eine Rollenanordnung 31 angeordnet ist. Die Drehachse D erstreckt sich entlang der axialen Richtung A. Eine radiale Richtung R erstreckt sich senkrecht zur axialen Richtung A von der Drehachse D weg. Eine Umfangsrichtung U läuft senkrecht zur axialen Richtung A und auch senkrecht zur radialen Richtung R um die Drehachse um.

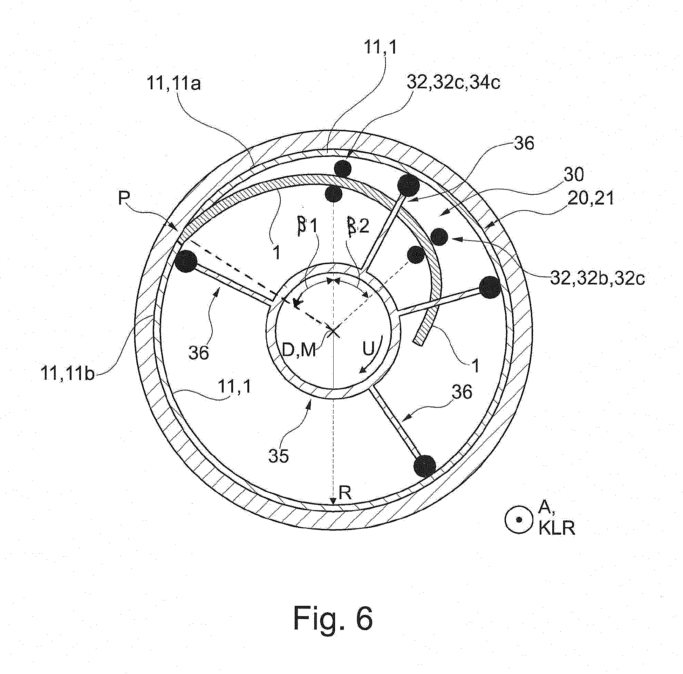

Die Figur 6 zeigt eine Draufsicht auf die Vorrichtung 30 entlang der axialen Richtung A.

Gemäß den Figuren 5 und 6 stehen vom Grundkörper 35 mehrere jeweils entlang der radialem Richtung R erstreckende radial erstreckende Streben 36 ab, die entlang der Umfangsrichtung U sowie entlang der axialen Richtung A im Abstand zueinander angeordnet sind. Mittels dieser Streben 36 stützt sich die Vorrichtung 30 an dem bereits an der Kanalumfangswandung 21 angeordneten Wickelrohr 1 ab und wird dadurch im Kanal 20 positioniert. Die Streben 36 können längenverstellbar ausgebildet sein, so dass auf Änderungen im Durchmesser des Kanals 20 reagiert werden kann.

Die Rollenanordnung 31 der Vorrichtung 30 weist drehbare Rollen 32 zum Transportieren und Ausrichten des Profilteils 1 auf. Mittels der Rollenanordnung 31 kann die Ausrichtung des Profilteils 1 im Kanal 20 eingestellt werden.

Ferner umfasst die Vorrichtung 30 im Beispielszenario eine Antriebseinheit 33, mittels welcher der Grundkörper 35 um die Drehachse D gedreht wird, wobei mit dieser Drehung auch eine translatorische Bewegung der gesamten Vorrichtung 30 in Richtung der Drehachse D einhergeht. In einer vereinfachten Variante des Beispiels kann auf eine solche Antriebseinheit aber auch verzichtet sein.

Zum Zusammenbauen des Profilteils 1 zu dem Wickelrohr 10 und zum abstandsfreien Anordnen des Wickelrohrs auf der Kanalwandung 21 des Kanals 20 kann die Vorrichtung 30 so im Kanal 20 angeordnet werden, dass die Drehachse D mit einer Mittellängsachse M des Kanals 20 übereinstimmt. Die Rollenanordnung 31 ist derart ausgebildet, dass sie das parallel zur Drehachse D in die Vorrichtung 30 eingebrachte Profilteil 1 so ablenkt, dass das Profilteil 1 nach der Ablenkung als Wickelrohr 10 unter Ausbildung mehrerer Umläufe 11 schraubenförmig um die Drehachse D umläuft, Dabei greift der an einem jeweiligen Umlauf 11 vorgesehene Vorsprung 3 formschlüssig in die am benachbarten Umlauf 11 ausgebildete Ausnehmung 4 ein.

Zur Erzeugung des Wickelrohrs 10 mit den schraubenförmigen Umläufen 11 wird die Rollenanordnung 31 mit den Rollen 32 um die Drehachse D gedreht. Dadurch wird die gesamte Vorrichtung 30 entlang der Drehachse D und somit entlang der Kanallängsrichtung KLR bewegt. Während dieser kombinierten Drehbewegung werden die einzelnen Umläufe 11 des Profiteils 1 aneinandergefügt und auf der Kanalwandung 21 angeordnet.

Mittels wenigstens einer ersten Rolle 32a, 32 wird das Profilteil 1 in die Vorrichtung 30 eingebracht und geführt. Im Beispiel sind zwei erste Rollen 32a vorgesehen, die ein erstes Rollenpaar 34a bilden, zwischen welchen das Profilteil 1 hindurchgeführt wird. Die ersten Rollen 32a können walzenartig ausgebildet sein.

Mittels wenigstens einer zweiten Rolle 32b, 32 wenigstens einer dritten Rolle 32c, 32c wird der am bereits auf der Kanalwandung 21 montierten zweiten Umlauf 11b noch zu befestigende erste Umlauf 11a relativ zu diesem ausgerichtet, wie dies bereits oben anhand der Figuren 4a und 4b beschrieben wurde. Im Beispiel sind zwei zweite Rollen 32b vorgesehen, die ein zweites Rollenpaar 34a bilden, zwischen welchen das Profilteil 1 hindurchgeführt wird. Die zweiten Rollen 32a können walzenartig ausgebildet sein. In analoger Weise sind im Beispielszenario sind zwei dritte Rollen 32c vorgesehen, die ein drittes Rollenpaar 34c bilden, zwischen welchen das Profilteil 1 hindurchgeführt wird. Die zweiten Rollen 32a können walzenartig ausgebildet sein.

Mittels der zweiten und dritten Rollen 32b, 32c wird also der am ersten Umlauf 11a vorgesehene Vorsprung 3 mit der am zweiten Umlauf 11b vorgesehenen Ausnehmung 4 in Eingriff gebracht.

Gemäß Figur 6 sind die dritten Rollen 32c, 32 unter einem ersten Umfangswinkel β1 zu einer Position P angeordnet, an welcher benachbarte Umläufe 11a, 11b miteinander in Eingriff gebracht werden. Die Verbindung der benachbarten Umläufe 11a, 11b erfolgt also im Abstand zu den Rollen 32c, 32. Im Beispiel ist der erste Umfangswinkel β1 ein spitzer Winkel, der vorzugsweise höchstens 60°, besonders bevorzugt höchstens 45° beträgt.

Außerdem sind die zweiten Rollen 32b, 32 unter einem entlang der Umfangsrichtung U gemessenen zweiten Umfangswinkel β2 zu den dritten Rollen 32c, 32 angeordnet. Im Beispiel ist der zweite Umfangswinkel β2 ein spitzer Winkel, der vorzugsweise höchstens 45° beträgt.

Optional kann die Vorrichtung 30 die Vorrichtung 30 wenigstens einen erwärmbaren und verbindbaren Metallkörper (nicht gezeigt) zum stoffschlüssigen Fügen, insbesondere zum thermischen Verbinden, dieser benachbarten Umläufe 11 des Profilteils 1 umfassen, der thermisch mit dem durch die Vorrichtung 30 geführten Profilteil 1 - insbesondere am Übergang benachbarter Umläufe - verbunden werden kann. Der Metallkörper kann als elektrisch bestrombarer Heizwiderstand ausgebildet sein. Alternativ oder zusätzlich kann die Vorrichtung 30 aber auch eine elektrische Induktionseinheit zum induktiven Erwärmen des Metallkörpers aufweisen. Mittels der elektrischen Induktionseinheit kann im Metallkörper ein elektrischer Strom induziert werden, der die zum Fügen bzw. Verschweißen erforderliche Heizwärme erzeugt.

Die Vorrichtung 30 kann optional eine in den Figuren nicht gezeigte Klebeeinheit mit einem Klebstoffauslass, insbesondere in Form einer Auslassdüse, aufweisen, mittels welchem wie oben erläutert Klebstoffs in die Ausnehmung 4 des jeweiligen Umlaufs 11a, 11b eingedüst werden kann.

## Patentansprüche

1. Profilteil (1) zur Ausbildung als Wickelrohr (10) für die Auskleidung, insbesondere Sanierung, eines Kanals (20),
- mit einem sich entlang einer Erstreckungsrichtung (ER) erstreckenden, vorzugsweise streifenförmigen, Grundkörper (2) aus Endlosmaterial, an welchem ein sich entlang der Erstreckungsrichtung (ER) erstreckender Vorsprung (3) und, quer zur Erstreckungsrichtung (ER) dem Vorsprung gegenüberliegend, eine sich ebenfalls entlang der Erstreckungsrichtung (ER) erstreckende und komplementär zum Vorsprung (3) ausgebildete Ausnehmung (4) ausgebildet ist,
- wobei der Grundkörper (2) im Profil senkrecht zur Erstreckungsrichtung (ER) die geometrische Grundform eines Rechtecks (5) mit zwei einander gegenüberliegenden Schmalseiten (6a, 6b) und zwei einander gegenüberliegenden Breitseiten (7a, 7b) aufweist, wobei an einer Ersten (6a) der beiden Schmalseiten (6a, 6b) der Vorsprung (3) und an einer Zweiten (6b) der beiden Schmalseiten (6a, 6b) die Ausnehmung (4) angeordnet ist,
- wobei der an der ersten Schmalseite (6a) ausgebildete Vorsprung (3) in Richtung von der zweiten Schmalseite (6b) weg vom Grundkörper (2) absteht und die an der zweiten Schmalseite (6b) vorgesehene Ausnehmung (4) in Richtung zur ersten Schmalseite (6a) in den Grundkörper (2) hineinragt.

2. Profilteil nach Anspruch 1,
**dadurch gekennzeichnet, dass**
- eine Profil-Längsrichtung (PLR) parallel zu einer der Breitseiten (7a, 7b) und eine Profil-Querrichtung (PQR) orthogonal zur Profil-Längsrichtung (PLR) und parallel zu einer der Schmalseiten (6a, 6b) verlaufen,
- die Ausnehmung (4) und der Vorsprung (3) so ausgebildet und aufeinander abgestimmt sind, dass der Vorsprung (3) in die Ausnehmung (4) geführt werden kann, ohne dass hierzu eine von außen auf das Profilteil (1) einwirkende Kraft entgegen der Profil-Querrichtung (PQR) erforderlich ist.

3. Profilteil nach Anspruch 1 oder 2,
**dadurch gekennzeichnet, dass**
die Ausnehmung (4) am Übergang von der ersten Schmalseite (6a) zur ersten Breitseite (7a) angeordnet ist und somit sowohl zur ersten Schmalseite (6a) als auch zur ersten Breitseite (7a) hin offen ausgebildet ist,
so dass vorzugsweise ein Vorsprung (3) eines Umlaufs (11) des Profilteils (1) ohne Kraftausübung entlang der Profil-Querrichtung (PQR) in die Ausnehmung (4) des benachbarten Umlaufs (11) einbringbar ist.

4. Profilteil nach einem der Ansprüche 1 bis 3,
**dadurch gekennzeichnet, dass**
die Ausnehmung (4) als Nut (8) mit zwei ineinander übergehenden Nutflanken (9a, 9b) ausgebildet ist, wobei eine Erste der beiden Nutflanken (9a) sich parallel zu einer Breitseite (7a, 7b) erstreckt und eine Zweite (9b) der beiden Nutflanken (9a, 9b) eine gekrümmte Kontur, vorzugsweise die Kontur eines Ellipsensegments aufweist.

5. Wickelrohr (10),
- mit einem Profilteil (1) nach einem der vorhergehenden Ansprüche,
- wobei das Profilteil (1) unter Ausbildung mehrerer Umläufe (11) schraubenförmig um eine Mittellängsachse (HA) umläuft, so dass der an einem jeweiligen Umlauf (11) vorgesehene Vorsprung (3) formschlüssig in die am benachbarten Umlauf (11) ausgebildete Ausnehmung (4) eingreift,
- wobei vorzugsweise das Wickelrohr (10) die Geometrie eines Hohlzylinders besitzt.

6. Wickelrohr (10) nach Anspruch 5,
**dadurch gekennzeichnet, dass**
- benachbarte Umläufe (11) an den beiden Schmalseiten (6a, 6b) des Profilteils (1) miteinander verbunden sind; oder/und dass
- benachbarte Umläufe (11) an den beiden Breitseiten (7a, 7b) des Profilteils )1= verbindungsfrei ausgebildet sind.

7. Wickelrohr (10) nach Anspruch 5 oder 6,
**dadurch gekennzeichnet, dass**
benachbarte Profilteile (1), vorzugsweise im Bereich des Formschlusses, stoffschlüssig, bevorzugt mittels einer Klebverbindung, miteinander verbunden sind.

8. Wickelrohr (10) nach einem der Ansprüche 5 bis 7,
**dadurch gekennzeichnet, dass**
benachbarte Profilteile (1), vorzugsweise im Bereich des Formschlusses, mittels eines Dichtungselements miteinander verbunden sind.

9. Verfahren zum Zusammenbauen eines Profilteils (1) nach einem der Ansprüche 1 bis 4 zu einem Wickelrohr (10) nach einem der Ansprüche 5 bis 8 in einem zu sanierenden Kanal (20), wobei der Kanal (20) sich entlang einer Kanallängsrichtung (KLR) erstreckt und von einer Kanalumfangswandung (11) begrenzt wird,
umfassend die folgenden Maßnahmen:
a) Bereitstellen des Profilteils (1) in dem Kanal (20),
b) Sukzessives schraubenförmiges Anordnen der einzelnen Umläufe (11) des zu bildenden Wickelrohrs (10) auf der Kanalumfangswandung (21), so dass die Mittellängsachse (HA) des Wickelrohrs (10) entlang der Kanallängsrichtung (KLR) verläuft, wobei der jeweils auf der Kanalumfangswandung (21) anzuordnende Umlauf (11) formschlüssig mit dem vorhergehenden, bereits auf der Kanalumfangswandung (21) angeordneten Umlauf (11) verbunden wird.

10. Verfahren nach Anspruch 9,
**dadurch gekennzeichnet, dass**
- der Vorsprung (3) ohne Kraftausübung entlang der Profil-Querrichtung (PQR) in die Ausnehmung (4) geführt wird; oder/und dass
- das Profilteil (1) bzw. das Wickelrohr (10) abstandsfrei auf der Kanalumfangswandung (21) angeordnet wird, oder/und dass
- das Profilteil (1) mit der radial äußeren Breitseite (7b) flächig an der Kanalumfangswandung (21) anliegt.

11. Verfahren nach Anspruch 9 oder 10,
**dadurch gekennzeichnet, dass**
zur Ausbildung der formschlüssigen Verbindung zwischen zwei benachbarten Umläufen (11) des Profilteils (1) der Vorsprung (3) des am noch auf der Kanalumfangswandung (21) anzuordnenden Umlaufs (11) mit der Ausnehmung (4) des benachbarten und bereits auf der Kanalumfangswandung (21) angeordneten Umlaufs (11) in Eingriff gebracht wird.

12. Verfahren nach einem der Ansprüche 9 bis 11,
**dadurch gekennzeichnet, dass**
zwei benachbarte Umläufe (11) im Bereich von Vorsprung (3) und Ausnehmung (4) stoffschlüssig, vorzugsweise mittels einer Klebverbindung oder mittels einer Schweißverbindung, miteinander verbunden werden.

13. Verfahren nach einem der Ansprüche 9 bis 12,
**dadurch gekennzeichnet, dass**
zum In-Eingriff-Bringen des Vorsprungs (3) mit der Ausnehmung (4) im Zuge von Maßnahme b) folgende Teil-Maßnahmen x) und y) ausgeführt werden:
x) in einem Längsschnitt durch die die Mittellängsachse (HA) des Wickelrohrs (10): Aufeinander-Zu-Bewegen des auf der Kanalumfangswandung (21) anzuordnenden (ersten) Umlaufs unter einem spitzen Winkel (α), vorzugsweise zwischen 20° und 40°, auf den benachbarten und bereits auf der Kanalumfangswandung (21) angeordneten (zweiten) Umlauf des Profilteils (1), bis der Vorsprung (3) des (ersten) Umlaufs (11a, 11) zumindest teilweise in der Ausnehmung (4) des benachbarten (zweiten) Umlaufs (11b, 11) angeordnet ist;
y) Reduzieren des spitzen Winkels (α) zwischen den beiden Umläufen (11a, 11b, 11), vorzugsweise auf einen Null-Wert, bis der Vorsprung (3) formschlüssig in der Ausnehmung (4) angeordnet ist und beide Umläufe (11) auf der Kanalumfangswandung (21) angeordnet sind.

14. Vorrichtung (30), insbesondere Wickelmaschine, zur Durchführung des Verfahrens nach einem der Ansprüche 9 bis 13,
- mit einer um eine Drehachse (D) drehbar ausgebildete Rollenanordnung (31), die mehrere drehbare Rollen (32) zum Transportieren und Ausrichten des Profilteils (1) aufweist,
- wobei die Rollenanordnung (31) derart ausgebildet ist, dass sie das, vorzugsweise parallel oder unter einem spitzen Winkel zur Drehachse (D), in die Vorrichtung (30) eingebrachte Profilteil (1) mittels der Rollenanordnung (31) so ablenkt, dass das Profilteil (1) nach der Ablenkung als Wickelrohr (10) unter Ausbildung mehrerer Umläufe (11) schraubenförmig um die Drehachse (D) umläuft, wobei der an einem jeweiligen Umlauf (11) vorgesehene Vorsprung (3) formschlüssig in die am benachbarten Umlauf (11) ausgebildete Ausnehmung (4) eingreift.

15. Vorrichtung nach Anspruch 14,
**dadurch gekennzeichnet, dass**
die Vorrichtung (30) wenigstens einen erwärmbaren und thermisch mit dem durch die Vorrichtung (30) geführten Profilteil (1) verbindbaren Metallkörper zum stoffschlüssigen Fügen, insbesondere zum thermischen Verbinden, benachbarter Umläufe (11) des Profilteils (1) umfasst.

16. Vorrichtung nach Anspruch 15,
**dadurch gekennzeichnet, dass**
- der Metallkörper als elektrisch bestrombarer Heizwiderstand ausgebildet ist, oder/und dass
- die Vorrichtung eine elektrische Induktionseinheit zum induktiven Erwärmen des Metallkörpers aufweist.
